# EUROPÄISCHE PATENTSCHRIFT

(11) **EP 3 063 774 B1**
(45) Veröffentlichungstag und Bekanntmachung des Hinweises auf die Patenterteilung: **31.01.2018**
(21) Anmeldenummer: 14766697.8
(22) Anmeldetag: 15.09.2014
(51) Int. Cl.: H01B 9/00, H01R 9/11, H01R 13/62, B23K 9/32, F23D 14/40, F23D 14/52, B23K 9/16

(54) **SCHWEISSWERKZEUGKUPPLUNG MIT MINDESTENS EIN MAGNETSYSTEM UND MINDESTENS EINEM KURZSCHLUSSEINRICHTUNG, SCHWEISSWERKZEUG SOWIE SCHWEISSVORRICHTUNG**
WELDING TOOL COUPLING HAVING AT LEAST ONE MAGNETIC SYSTEM AND AT LEAST ONE SHORT-CIRCUIT DEVICE, WELDING TOOL, AND WELDING DEVICE
ACCOUPLEMENT D'OUTIL DE SOUDAGE POURVU D'AU MOINS UN SYSTÈME MAGNÉTIQUE ET À D'AU MOINS UN DISPOSITIF DE COURT-CIRCUITAGE, OUTIL DE SOUDAGE ET DISPOSITIF DE SOUDAGE

(30) Priorität: 30.10.2013 DE 102013111938
(43) Veröffentlichungstag der Anmeldung: 07.09.2016
(73) Patentinhaber: Alexander Binzel Schweisstechnik GmbH & Co. KG, 35418 Buseck (DE)
(72) Erfinder: JESSER, Gabriel, 35043 Marburg (DE)
(74) Vertreter: Müller, Eckhard
(86) Internationale Anmeldenummer: PCT/EP2014/069594
(87) Internationale Veröffentlichungsnummer: WO 2015/062775

(56) Entgegenhaltungen:
- DE-U1- 20 018 124
- JP-A- 2004 167 583
- US-A- 2 209 558
- US-A- 2 972 485
- US-A- 3 610 875

## Beschreibung

Die Erfindung betrifft eine Schweißwerkzeugkupplung, insbesondere eine Schlauchpaketschnittstelle oder ein Schweißbrennergriffstück, zum Verbinden eines Schweißwerkzeuges, insbesondere eines Schweißbrennerhalses, mit einer Versorgungsleitung einer Schweißvorrichtung, wobei die Schweißwerkzeugkupplung zum lösbaren Ankuppeln des Schweißwerkzeuges eine Kupplungseinrichtung aufweist, mittels derer eine magnetische Haltekraft ein- und ausgeschaltet werden kann (Anspruch 1 ; siehe z.B. DE 200 18 124 U1). Die Erfindung betrifft ferner ein Schweißwerkzeug zum Ankuppeln an eine derartige Schweißwerkzeugkupplung (siehe Anspruch 20 ; siehe z.B. JP 2004/167583 A), sowie eine Schweißvorrichtung mit einer solchen Schweißwerkzeugkupplung (siehe Anspruch 24). Eine magnetische Schweißwerkzeugkupplungen der eingangs genannten Art ist beispielsweise aus der DE 200 18 124 U1 bekannt, die ein magnetisches Werkzeugwechselsystem eines Roboterarmes für verschiedene Werkzeuge, u. a. Schweißwerkzeuge, beschreibt. Das Werkzeugwechselsystem weist wenigstens zwei Kupplungshälften auf, die über eine Trennebene lösbar miteinander verbindbar sind, wobei die eine Kupplungshälfte dem bewegbaren Roboterarm und die andere Kupplungshälfte dem Schweißwerkzeug zugeordnet ist. Das Schweißwerkzeug ist mit dem Roboterarm über einen magnetischen Haltemechanismus verbunden, welcher darauf beruht, dass die eine Kupplungshälfte ein ferromagnetisches Material und die andere Kupplungshälfte ein stationäres Permanent- und/oder Elektromagnetsystem aufweist, von dem die korrespondierende ferromagnetische Kupplungshälfte magnetisch angezogen wird. Bei Verwendung eines Elektromagneten alleine oder in Kombination mit einem Permanentmagneten kann die Haltekraft außerdem ein- und ausgeschaltet werden, wobei im Falle eines kombinierten Permanent-Elektro-Magnetsystems der Elektromagnet in der Einschaltstellung die Haltekraft des Permanentmagneten verstärkt und in der Ausschaltstellung durch entsprechende Umpolung abschwächt bzw. gänzlich kompensiert. Zum Ein- und Ausschaltung der magnetischen Haltekraft ist jedoch in jedem Fall ein schaltbarer Elektromagnet erforderlich, für den eine technisch aufwendige elektrische Schaltvorrichtung vorhanden sein muss.

Aus der US 2 972 485 A ist ein Magnetspannfutter mit zwei übereinander angeordneten Magnetringen bekannt, in denen Magnete sowie Eisenringe, in Umfangsrichtung gesehen, abwechselnd angeordnet sind. Der untere der Magnetringe ist dabei relativ zu dem oberen Magnetring verdrehbar, wobei Drehanschläge vorgesehen sind, so dass der untere Magnetring in einem vorgegebenen Winkelbetrag verdrehbar ist. Die Magnete des unteren Magnetrings können zu den Magneten des oberen Magnetrings so positioniert werden, dass Magnetfeldlinien aus der magnetischen Kupplung herausführen, so dass ein zu bearbeitendes Werkstück magnetisch an dem Spannfutter lagegesichert fixiert ist.

Aus der US 2 209 558 A ist eine magnetische Spannplatte bekannt, auf der ein zu bearbeitendes Werkstück magnetisch fixiert wird. Das Werkstück ist dann wieder von der Spannplatte entfernbar, wenn die magnetische Haltekraft aufgehoben wird. Die Spannplatte weist Magnete auf, welche jeweils in einer Aufnahme drehbar gehalten sind. Die magnetische Haltekraft auf ein Werkstück kann durch Drehung der Magnete aktiviert oder deaktiviert werden.

Aufgabe der vorliegenden Erfindung ist es, eine Schweißwerkzeugkupplung, ein Schweißwerkzeug sowie eine Schweißvorrichtung der eingangs genannten Art dahingehend zu verbessern, dass das Schweißwerkzeug technisch möglichst einfach, insbesondere ohne Einbeziehung einer elektrischen Schaltvorrichtung und vorzugsweise von nur einer Bedienperson, an die Schweißwerkzeugkupplung angebunden werden kann.

Diese Aufgabe wird gelöst durch eine Schweißwerkzeugkupplung gemäß Anspruch 1, ein Schweißwerkzeug gemäß Anspruch 20 sowie eine Schweißvorrichtung gemäß Anspruch 24. Vorteilhafte Ausgestaltungen der Erfindung sind Gegenstand der Unteransprüche.

Die erfindungsgemäß Schweißwerkzeugkupplung mit ein- und ausschaltbarer magnetischer Haltekraft zeichnet sich dadurch aus, dass die Kupplungseinrichtung wenigstens ein Magnetsystem und wenigstens eine Kurzschlusseinrichtung aufweist, die relativ zueinander zwischen einer Einschaltstellung und einer Ausschaltstellung derart verschiebbar sind, dass der vom Magnetsystem generierte magnetische Fluss in der Einschaltstellung unter Erzeugung der magnetischen Haltekraft aus der Kupplungseinrichtung heraustritt und in der Ausschaltstellung mittels der Kurzschlusseinrichtung unter Erlöschen der magnetischen Haltekraft zumindest teilweise in der Kupplungseinrichtung kurzgeschlossen ist.

In erfindungsgemäßer Weise wurde erkannt, dass das Ein- und Ausschalten der magnetischen Haltekraft durch eine rein mechanische Verschiebebewegung eines Magnetsystems relativ zu einer Kurzschlusseinrichtung realisiert werden kann, ohne dass auf eine spezielle elektrische Schaltvorrichtung zum Ein- und Ausschalten eines Elektromagneten zurückgegriffen werden muss. Die erfindungsgemäße Lösung beruht allein darauf, dass die vom ersten Magnetsystem dauerhaft generierten magnetischen Flüssen in der Einschaltstellung durch die Kurzschlusseinrichtung aus der Kupplungseinrichtung herausgeführt werden und in der Ausschaltstellung zumindest teilweise in der Kupplungseinrichtung kurzgeschlossen werden.

Zum Kurzschließen in bzw. Herausleiten des magnetischen Flusses aus der Kupplungseinrichtung kann die Kurschlusseinrichtung nach einer ersten vorteilhaften Ausgestaltung der Erfindung wenigstens ein weiteres Magnetsystem und/oder wenigstens einen Polschuh aufweisen, mit deren Hilfe die magnetische Haltekraft ein- und ausschaltbar ist. Weist die Kurzschlusseinrichtung wenigstens ein weiteres Magnetsystem - nachfolgend als zweites Magnetsystem bezeichnet - auf, ist es in vorteilhafter Weise vorgesehen, dass das zweite Magnetsystem in der Einschaltstellung den vom ersten Magnetsystem generierten magnetischen Fluss, insbesondere außerhalb der Kupplungseinrichtung, verstärkt und in der Ausschaltstellung kurzschließt und/oder zumindest teilweise gegenkompensiert, so dass die magnetische Haltekraft lediglich durch eine rein mechanische Bewegung der beiden Magnetsysteme relativ zueinander ein- und ausgeschaltet werden kann.

In analoger Weise kann auch der Polschuh entweder zum Kurzschließen oder Herausleiten des vom dem ersten Magnetsystem generierten Flusses dienen. Hierzu weist der Polschuh nach einer weiteren vorteilhaften Ausgestaltung der Erfindung, ähnlich dem Wirkprinzip einer mechanischen Magnetspannplatte oder eines mechanischen Magnetspannfutters, wenigstens zwei voneinander magnetisch isolierte Abschnitte auf, die aus einem magnetisch leitenden, insbesondere ferromagnetischen, Material bestehen und relativ zum ersten Magnetsystem derart verschoben werden können, und zwar derart, dass der magnetische Fluss des ersten Magnetsystems über die magnetisch leitenden Abschnitte entweder innerhalb der Kupplungseinrichtung kurzgeschlossen oder nach außen herausgeleitet werden.

Selbstverständlich ist es auch denkbar, dass die Kupplungseinrichtung nach einer weiteren vorteilhaften Ausgestaltung der Erfindung eine Kombination aus einem Magnetsystem und einem Polschuh aufweist. Dabei ist es insbesondere von Vorteil, wenn das zweite Magnetsystem derart ausgebildet und angeordnet ist, dass der von der Gesamtheit aller Magnetsysteme generierte magnetische Fluss in der Einschaltstellung über den Polschuh aus der Kupplungseinrichtung heraustritt bzw. herausgeleitet wird, wodurch insgesamt in vorteilhafter Weise die Stärke der magnetischen Haltekraft erhöht wird.

Im Ergebnis zeichnet sich eine derart ausgebildete Kupplungseinrichtung mit einer magnetsystem- und/oder polschuhbasierten Kurzschlusseinrichtung durch eine besonders einfache Bedienung und eine sehr geringe Störanfälligkeit aus.

Analog dem Aufbau des Polschuhs aus wenigstens zwei voneinander magnetisch isolierten Abschnitten, kann es nach einer weiteren vorteilhaften Ausgestaltung der Erfindung vorgesehen sein, dass auch das zweite Magnetsystem mehrere alternierend gepolte und/oder magnetisch voneinander isolierte Magnete, insbesondere Dipolmagnete, aufweist. Besonders vorteilhaft sind hierbei das erste und das zweite Magnetsystem derart zueinander angeordnet, dass die Pole der Magnete des ersten Magnetsystems in der Einschaltstellung an jeweils gleichnamige und in der Ausschaltstellung an jeweils ungleichnamige Pole der Magnete des zweiten Magnetsystems angrenzen. Hierdurch wird erreicht, dass in der Einschaltstellung der von der Gesamtheit der Magnetsysteme generierte magnetische Fluss unter Erzeugung der magnetischen Haltekraft aus der Kupplungseinrichtung heraustritt und in der Ausschaltstellung unter Erlöschen der magnetischen Haltekraft zumindest teilweise in der Kupplungseinrichtung kurzgeschlossen ist bzw. dass sich die magnetischen Flüsse der beiden Magnetsysteme in der Ausschaltstellung zumindest teilweise kompensieren.

Nach einer weiteren vorteilhaften Ausführungsform der Erfindung können die Magnete des ersten und/oder des zweiten Magnetsystems als Permanentmagnete und/oder als Elektromagnete ausgebildet sein. Permanentmagnete bieten den Vorteil, dass auf eine Stromversorgung gänzlich verzichtet werden kann, wodurch sich der Kostenaufwand für die Schweißwerkzeugkupplung reduziert. Außerdem bieten Permanentmagnete den Vorteil, dass das Schweißwerkzeug auch im Falle eines Stromausfalles noch immer in der Schweißwerkzeugkupplung sicher gehalten ist. Demgegenüber bieten Elektromagnete den Vorteil, dass die magnetische Haltekraft durch Erhöhen oder Erniedrigen des magnetfelderregenden Stromflusses variierbar ist.

Eine besonders einfache Bedienung der Schweißwerkzeugkupplung kann dadurch erreicht werden, dass die Kupplungseinrichtung nach Art einer Drehkupplung ausgebildet ist. Hierzu kann er nach einer besonders vorteilhaften Ausgestaltung der Erfindung vorgesehen sein, dass das erste Magnetsystem an einem insbesondere ringförmigen Schaltelement aus vorzugweise nicht-magnetisierbarem Material angeordnet ist, welches relativ zur Kurzschlusseinrichtung verschiebbar, insbesondere um die Längsachse der Schweißwerkzeug-Kupplung drehbar, gelagert ist.

Alternativ ist es selbstverständlich auch denkbar, dass die Kurzschlusseinrichtung an einem insbesondere ringförmigen Schaltelement aus vorzugsweise nicht-magnetisierbarem Material angeordnet ist, welches relativ zum ersten Magnetsystem verschiebbar, insbesondere um die Längsachse der Schweißwerkzeug-Kupplung drehbar, gelagert ist.

Insbesondere wenn die Kupplungseinrichtung als Drehkupplung ausgebildet ist, erweist es sich als vorteilhaft, die Magnete des ersten Magnetsystems um eine Längsachse der Schweißwerkzeugkupplung, anzuordnen. Ergänzend oder alternativ kann es ebenfalls vorgesehen sein, dass die Magnete des zweiten Magnetsystems ringförmig nebeneinander, vorzugsweise ebenfalls um die Längsachse der Schweißwerkzeugkupplung, angeordnet sind, wobei die Polachsen der Magneten entweder parallel zur Ringebene oder senkrecht zur Umfangsrichtung der ringförmigen Anordnung ausgerichtet sind. Durch eine derartige Anordnung der beiden Magnetsysteme und deren Polachsen kann in besonders effektiver Weise ein Ausschalten und Einschalten der magnetischen Haltekraft realisiert werden.

Um zu erreichen, dass der magnetische Fluss des zweiten Magnetsystems einerseits in der Einschaltstellung zur magnetischen Haltekraft beiträgt und andererseits in der Ausschaltstellung den magnetischen Fluss des ersten Magnetsystems zumindest teilweise gegenkompensiert, ist es gemäß einer weiteren Ausführungsform der Erfindung von Vorteil, wenn die Polachsen des ersten Magnetsystems senkrecht zu der oder den Polachse(n) des zweiten Magnetsystems ausgerichtet ist bzw. sind.

Weist die insbesondere als Drehkupplung ausgebildete Kupplungseinrichtung darüber hinaus einen Polschuh auf, so bietet es sich nach einer weiteren vorteilhaften Ausführungsform der Erfindung an, dass die magnetisch isolierten Abschnitte des Polschuhs ringsegmentförmig ausgebildet sind und/oder einen kreisförmigen, vorzugsweise koaxial zur Längsachse ausgerichteten Bund bilden, an dessen einer Stirnseite in der Einschaltstellung das anzubindende Schweißwerkzeug gehalten ist und/oder an dessen anderer Stirnseite das erste Magnetsystem angrenzt. Durch eine derartige Anordnung der Polschuhe kann in besonders einfacher Weise erreicht werden, dass der Polschuh den magnetischen Fluss des ersten und ggf. des zweiten Magnetsystems in der Einschaltstellung in Richtung des anzubindenden Werkzeugs aus der Kupplungseinrichtung herausleitet und in der Ausschaltstellung unter Erlöschen der magnetischen Haltekraft zumindest teilweise in der Kupplungseinrichtung kurzschließt.

Um die Leitungen des magnetischen Flusses im Polschuh, insbesondere das Kurzschließen des magnetischen Flusses in der Ausschaltstellung zu begünstigen, ist es nach einer weiteren vorteilhaften Ausgestaltung der Erfindung vorgesehen, dass der Polschuh einen hohlzylinderförmigen Fortsatz aufweist, der sich an die magnetisch isolierten Abschnitte bzw. den Bund des Polschuhs, vorzugsweise koaxial zur Längsachse, ins Innere der Schweißwerkzeugkupplung anschließt.

Zur magnetischen Isolierung der einzelnen Abschnitte des Polschuhs bzw. der einzelnen, insbesondere alternierend gepolten Magnete des ersten und/oder zweiten Magnetsystems sind diese in vorteilhafter Weise durch magnetische Isolatoren aus nicht-magnetisierbarem, vorzugsweise diamagnetischem Material voneinander magnetisch getrennt bzw. isoliert.

Bei einer besonders vorteilhaften Ausführungsform der Erfindung, bei der die Kupplungseinrichtung sowohl einen Polschuh als auch ein zweites Magnetsystem aufweist, ist je ein Magnet des zweiten Magnetsystems zwischen zwei benachbarten Abschnitten des Polschuhs, vorzugsweise im Bereich der an das erste Magnetsystem angrenzenden Stirnseite des Bundes, angeordnet. Hierdurch kann in besonders effektiver Weise ein Ein- und Ausschalten der magnetischen Haltekraft gewährleistet werden. Vor allem in der Ausschaltstellung wird durch diese Anordnung der Magnete des zweiten Magnetsystems und der Abschnitte des Polschuhs der magnetische Fluss des ersten Magnetsystems nahezu vollständig in der Kupplungseinrichtung kurzgeschlossen.

Um in der Einschaltstellung eine möglichst große magnetische Haltekraft zu erzeugen, ist es bei einer weiteren vorteilhaften Ausführungsform der Erfindung vorgesehen, dass zumindest in der Einschaltstellung je ein Abschnitt des Polschuhs an je einem Magneten des ersten Magnetsystems angrenzt, wobei vorzugweise die Abschnitte zumindest im Angrenzbereich an die Magnete des ersten Magnetsystems eine größere seitliche Ausdehnung aufweisen, als die Magnete selbst.

Um eine weitere Verstärkung der magnetischen Haltekraft zu bewirken, kann ein vorzugsweise ringförmiges Weicheisenelement vorgesehen sein, welches auf einer Seite des ersten Magnetsystems, vorzugsweise auf der dem Polschuh bzw. dem Bund abgewandten Seite, die alternierenden Pole der Magnete des ersten Magnetsystems magnetisch leitend miteinander verbindet.

Um eine mechanische Führung und zusätzliche Stabilisierung des anzubindenden Schweißwerkzeuges an die Schweißwerkzeugkupplung zu erreichen, kann die Schweißwerkzeugkupplung nach einer weiteren vorteilhaften Ausführungsform der Erfindung wenigstens eine Zentrieröffnung, vorzugweise koaxial zu ihrer Längsachse, aufweisen, welche mit einem korrespondierenden Zentrierfortsatz am Schweißwerkzeug in Eingriff bringbar ist.

Weiterhin ist es denkbar, dass die Schweißwerkzeugkupplung wenigstens einen Medienanschluss, vorzugweise im Boden der Zentrieröffnung, aufweist, welcher beim Verbinden des Schweißwerkzeuges mit der Schweißwerkzeugkupplung mit wenigstens einem korrespondierenden Medienanschluss am Schweißwerkzeug, vorzugsweise am Ende des Zentrierfortsatzes, wirkverbindbar ist. Als Medien kommen insbesondere elektrischer Strom, Gas und/oder Wasser in Betracht, die während des Schweißvorgangs im Schweißwerkzug zu Verfügung stehen sollen. Ein erster unabhängiger Gedanke der Erfindung betrifft ein Schweißwerkzeug, insbesondere einen Schweißbrennerhals, zum Ankuppeln an die zuvor beschriebene, erfindungsgemäße Schweißwerkzeugkupplung entsprechend dem Anspruch 20. Zur magnetischen Anbindung an die Kupplungseinrichtung, vorzugsweise an den Polschuh, insbesondere an die Stirnseite des Bundes, ist es nach einer ersten vorteilhaften Ausführungsform der Erfindung vorgesehen, dass das Kontaktelement ringförmig ausgebildet ist. Als Einführhilfe wie auch als zusätzliches Stabilisierungselement zum Ankuppeln des Schweißwerkzeuges an die Schweißwerkzeugkupplung kann das Schweißwerkzeug - wie oben beschrieben - einen Zentrierfortsatz aufweisen, der mit der korrespondierenden Zentrieröffnung in der Schweißwerkzeugkupplung in Eingriff bringbar ist.

Ferner weist das Schweißwerkzeug, vorzugsweise im Zentrierfortsatz, in vorteilhafter Weise wenigstens einen Medienanschluss auf, welcher beim Verbinden des Schweißwerkzeuges mit der Schweißwerkzeugkupplung in der Schweißwerkzeugkupplung mit dem wenigstens einen Medienanschluss wirkverbindbar ist.

Ein weiterer unabhängiger Gedanke der Erfindung betrifft eine Schweißvorrichtung, insbesondere einen Schweißbrenner, mit einer erfindungsgemäßen Schweißwerkzeugkupplung und/oder mit einem erfindungsgemäßen Schweißwerkzeug der zuvor beschriebenen Art.

Weitere Ziele, Vorteile, Merkmale und Anwendungsmöglichkeiten der vorliegenden Erfindung ergeben sich aus der nachfolgenden Beschreibung eines Ausführungsbeispieles anhand der Zeichnung. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Fig. 1: perspektivische Darstellung eines möglichen Ausführungsbeispiels einer erfindungsgemäßen Schweißvorrichtung mit Schweißwerkzeug, Schweißwerkzeugkupplung und Versorgungsleitung,
- Fig.2: perspektivische Detaildarstellung der Schweißwerkzeugkupplung gemäß Fig.1,
- Fig. 3: Detaillängsschnitt durch die Schweißwerkzeugkupplung gemäß Fig. 2,
- Fig. 4: Detaillängsschnitt durch die Schweißwerkzeugkupplung und das Schweißwerkzeug gemäß Fig. 1,
- Fig. 5: abgerollte Schnittdarstellung der Schweißwerkzeugkupplung mit angekuppeltem Schweißwerkzeug in Einschaltung entlang des zylindrischen Schnitts S-S gemäß Fig. 4, und
- Fig. 6: abgerollte Schnittdarstellung der Schweißwerkzeugkupplung mit angekuppeltem Schweißwerkzeug in Ausschaltung entlang des zylindrischen Schnitts S-S gemäß Fig. 4.

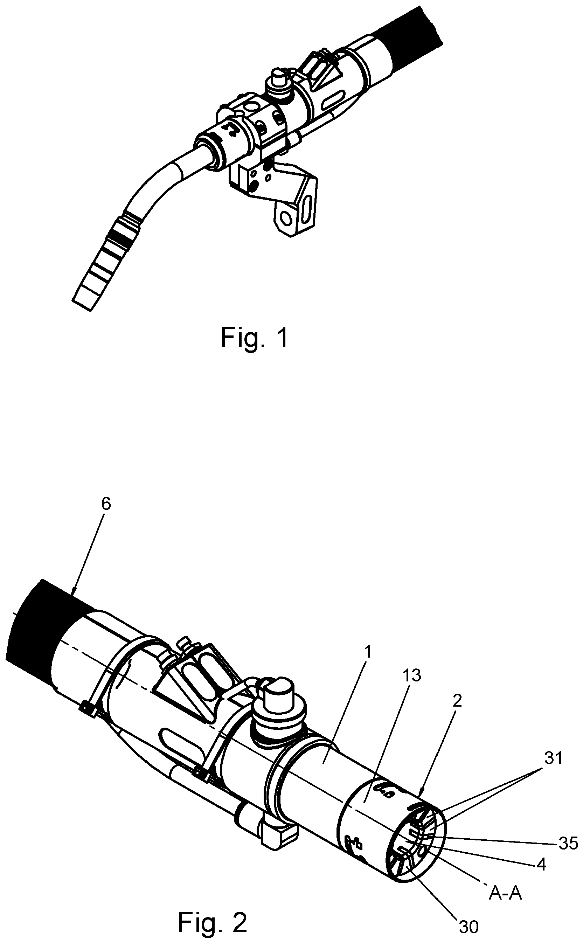

Die Fig. 1 zeigt ein mögliches Ausführungsbeispiel einer erfindungsgemäßen Schweißvorrichtung, vorliegend eines Schweißbrenners, die eine Schweißwerkzeugkupplung 1 aufweist, mit deren Hilfe ein Schweißwerkzeug 3, vorliegend ein Schweißbrennerhals, mit einer Versorgungsleitung 6 der Schweißvorrichtung verbunden wird, wobei die Anbindung des Schweißwerkzeuges 3 an die Schweißwerkzeugkupplung 1 über eine Kupplungseinrichtung 2 erfolgt, welche zum lösbaren Ankuppeln des Schweißwerkzeuges 3 eine ein- und ausschaltbare magnetische Haltekraft erzeugt.

Gemäß der Erfindung ist es vorgesehen, dass die Kupplungseinrichtung 2 wenigstens ein Magnetsystem 10 und wenigstens eine Kurzschlusseinrichtung 100 aufweist, die relativ zueinander zwischen einer Einschaltstellung und einer Ausschaltstellung derart verschiebbar sind, dass der vom Magnetsystem 10 generierte magnetische Fluss in der Einschaltstellung unter Erzeugung der magnetischen Haltekraft aus der Kupplungseinrichtung 2 heraustritt und in der Ausschaltstellung mittels der Kurzschlusseinrichtung 100 unter Erlöschen der magnetischen Haltekraft zumindest teilweise in der Kupplungseinrichtung 2 kurzgeschlossen ist.

Bei dem in den Fig. 1 bis 6 dargestellten Ausführungsbeispiele der erfindungsgemäßen Schweißwerkzeugkupplung 1 weist die Kurzschlusseinrichtung 100 neben dem ersten Magnetsystem 10 ein weiteres Magnetsystem 20, nachfolgend als zweites Magnetsystem 20 bezeichnet, sowie einen Polschuh 30 auf. Wie insbesondere den Fig. 2, 5 und 6 zu entnehmen ist, weist der Polschuh 30 mehrere von einander magnetisch isolierte Abschnitte 31 auf, die aus einem magnetisch leitenden, vorliegend ferromagnetischen Material bestehen. Die magnetische Isolierung der einzelnen Abschnitte 31 des Polschuhs 30 erfolgt durch magnetische Isolatoren 35, die aus einem nicht-magnetisierbaren, vorliegend diamagnetischem Material bestehen.

Wie den Fig. 2 bis 6 ferner zu entnehmen ist, weisen sowohl das erste als auch das zweite Magnetsystem jeweils mehrere alternierend gepolte und magnetisch von einander isolierte Dipol-Permanentmagnete 11, 12, 21, 22 auf, wobei im vorliegendem Ausführungsbeispiel sowohl die Magnete 11, 12 des ersten Magnetsystems 10 als auch die Magnete 21, 22 des zweiten Magnetsystems 20 ringförmig neben einander um die Längsachse A-A der Schweißwerkzeugkupplung angeordnet sind. Während die Polachsen der Magnete 11, 12 des ersten Magnetsystems in senkrechter Richtung zur Ringebene, d.h. parallel zur Längsachse A-A ausgerichtet sind, weisen die Polachsen der Magnete 21, 22 des zweiten Magnetsystems eine Orientierung parallel zur Ringebene, d.h. senkrecht zur Längsachse A-A der Schweißwerkzeugkupplung 1 auf.

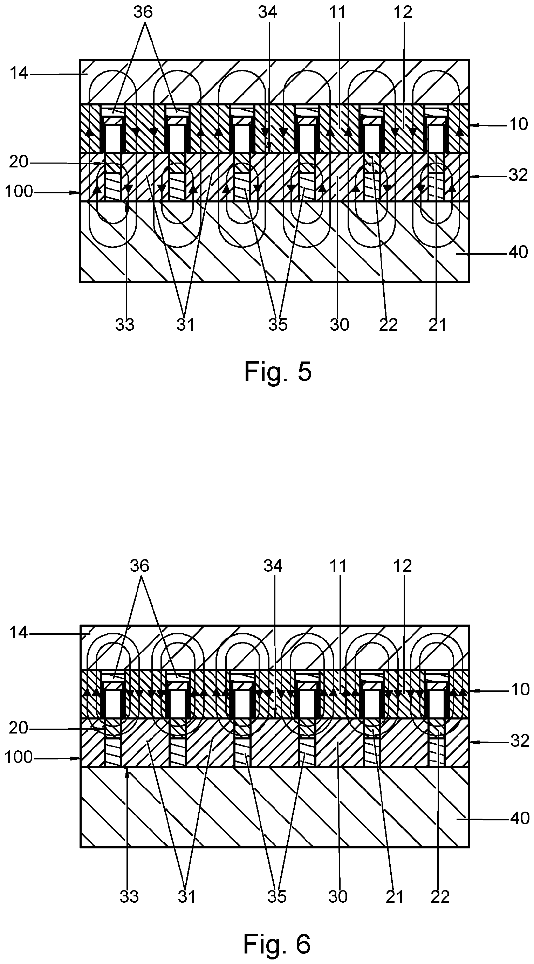

Insbesondere sind - wie die Fig. 5 und 6 zeigen - das erste und das zweite Magnetsystem 10, 20 derart zueinander angeordnet, dass die Pole der Magnete 11, 12 des ersten Magnetsystems 10 in der Einschaltstellung an jeweils gleichnamige und in der Ausschaltstellung an jeweils ungleichnamige Pole der Magnete 21, 22 des zweiten Magnetsystems 20 angrenzen. Hierdurch wird erreicht, dass das zweite Magnetsystem 20 den vom ersten Magnetsystem 10 generierten magnetischen Fluss in der Einschaltstellung außerhalb der Kupplungseinrichtung 2 verstärkt und in der Ausschaltstellung kurzschließt bzw. zumindest teilweise gegenkompensiert. Im Weiteren besteht die Aufgabe des Polschuhs 30 darin, den von der Gesamtheit aller Magnetsysteme 10, 20 generierten magnetischen Fluss in der Einschaltstellung aus der Kupplungseinrichtung 2 heraustreten zu lassen.

Wie insbesondere den Fig. 2 bis 6 zu entnehmen ist, ist das erste Magnetsystem 10 an einem ringförmigen Schaltelement 13 aus nicht-magnetisierbaren Material angeordnet, welches relativ zur Kurzschlusseinrichtung 100 um die Längsachse A-A der Schweißwerkzeugkupplung 1 drehbar gelagert ist. Korrespondierend dazu ist auch der Polschuh ringförmig bzw. zylindersymmetrisch ausgebildet. Dementsprechend sind die magnetisch isolierten Abschnitte 31 des Polschuhs 30 ringsegmentförmig ausgebildet und bilden einen kreisförmigen, koaxial zu Längsachse A-A ausgerichteten Bund 32, an dessen einer Stirnseite 33 das anzubindende Schweißwerkzeug 3 in der Einschaltstellung gehalten ist und an dessen anderer Stirnseite 34 das erste Magnetsystem 10 angrenzt.

Außerdem weist der Polschuh 30 eine hohlzylinderförmigen Fortsatz 37 auf, der sich an die magnetisch isolierten Abschnitte 31 bzw. den Bund 32 koaxial zu Längsachse A-A ins Innere der Schweißwerkzeugkupplung 1 anschließt.

Der konkrete Aufbau der Kupplungseinrichtung 100 ergibt sich insbesondere aus den Fig. 2 bis 4, wonach je an Magnet 21, 22 des zweiten Magnetsystems 20 zwischen bei benachbarten Abschnitten 31 des Polschuhs 30 im Bereich der an das erste Magnetsystem 10 angrenzenden Stirnseite 34 des Bundes 32 angeordnet ist.

Das Ein- und Ausschalten der magnetischen Haltekraft erfolgt dadurch, dass das Schaltelement 13, in dem das erste Magnetsystem 10 angeordnet ist, relativ zu Kurzschlusseinrichtung 100 um einen Winkel verdreht wird, der dem Winkelabstand zweier benachbarter, entgegengesetzt gepolter Magnete 21, 22 des zweiten Magnetsystems 20 entspricht. Entsprechend zeigt Fig. 5 die Position der Kupplungseinrichtung 100 in der Einschaltstellung, während in Fig. 6 die Kupplungseinrichtung 100 in der Ausschaltstellung dargestellt ist. In der Einschaltstellung wird der von dem ersten Magnetsystem 10 generierte magnetische Fluss durch das zweite Magnetsystem 20 verstärkt und über den Polschuh 30 bzw. dessen Abschnitte 31 aus der Kupplungseinrichtung 2 über die Stirnseite 33 herausgeführt und in das ringförmige, aus magnetisierbarem Material bestehenden und an der Stirnseite 33 anliegende Kontaktelement 40 des Schweißwerkzeuges 3 hineingeleitet, wodurch im Ergebnis das anzubindende Schweißwerkzeug 3 in der Einschaltstellung an der Schweißwerkzeugkupplung 1 magentisch gehalten wird. Demgegenüber wird in der Ausschaltstellung der von dem ersten Magnetsystem 10 generierte magnetische Fluss durch die geänderte Polanordnung des zweite Magnetsystem 20 relativ zum ersten Magnetsystem 10 zumindest teilweise in der Kupplungseinrichtung 2 kurzgeschlossen bzw. gegenkompensiert, da in dieser Position die Pole der Magnete 11, 12 des ersten Magnetsystems 10 an jeweils ungleichnamige Pole der Magnete 21, 22 des zweiten Magnetsystems angrenzen.

Um die magnetische Haltekraft in der Einschaltstellung möglichst effizient in den Außenbereich der Kupplungseinrichtung 2 hinaustreten zu lassen, ist es vom besonderen Vorteil, dass - wie bei dem vorliegenden Ausführungsbeispiel gemäß Fig. 1 bis 6 - zumindest in der Einschaltstellung je an Abschnitt 31 des Polschuhs 30 an je einen Magneten 11, 12 des ersten Magnetsystems 10 angrenzt, wobei die Abschnitte 31 zumindest im Angrenzbereich an die Magnete 11, 12 eine größere seitliche Ausdehnung aufweisen, als die Magnete 11, 12 des ersten Magnetsystems 10.

Zur Verstärkung der magnetischen Haltekraft im Anbindungsbereich der Kupplungseinrichtung 100 ist außerdem ein ringförmiges Weicheisenelement 14 vorgesehen, welches auf der im Polschuh 30 bzw. dem Bund 32 abgewandten Seite die alternierenden Pole der Magnete 11, 12 magnetisch leitend mit einander verbindet.

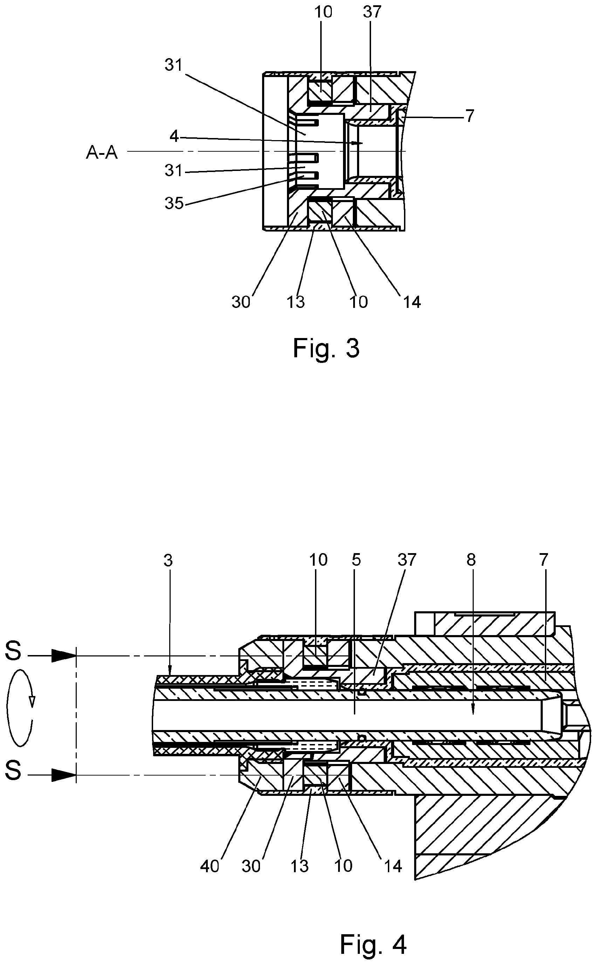

Darüber hinaus ist bei dem vorliegenden Ausführungsbeispiel gemäß den Fig. 1 bis 6 zum Anbinden des Schweißwerkzeuges 3 an die Schweißwerkzeugkupplung 1 eine koaxial zur Längsachse A-A verlaufende Zentrieröffnung 4 vorgesehen, welche mit einem korrespondierenden Zentriervorsatz 5 am Schweißwerkzeug 3 in Eingriff bringbar ist. Wie insbesondere Fig. 4 zu entnehmen ist, ist im Boden der Zentrieröffnung 4 außerdem ein Medienanschluss 7 vorgesehen, welcher beim Verbinden des Schweißwerkzeuges 3 mit der Schweißwerkzeugkupplung 1 mit einem korrespondieren Medienanschluss 8 am Ende des Zentriervorsatzes 5 des Schweißwerkzeuges 3 wirkverbindbar ist. Vom diesem Medienanschluss 8 ausgehend erstreckt sich im Weiteren eine Medienleitung durch das Schweißwerkzeug 3 hindurch bis an die Spitze des Werkzeuges.

### Bezugszeichenliste

- 1: Schweißwerkzeugkupplung
- 2: Kupplungseinrichtung
- 3: Schweißwerkzeug
- 4: Zentrieröffnung
- 5: Zentrierfortsatz
- 6: Versorgungsleitung
- 7: Medienanschluss in der Schweißwerkzeugkupplung
- 8: Medienanschluss im Schweißwerkzeug
- 10: erstes Magnetsystem
- 11: Magnet
- 12: Magnet
- 13: Schaltelement
- 20: zweites Magnetsystem
- 21: Magnet
- 21: Magnet
- 30: Polschuh
- 31: magnetisch isolierte Abschnitte
- 32: Bund
- 33: eine Stirnseite des Polschuhs
- 34: andere Stirnseite des Polschuhs
- 35: magnetische Isolatoren
- 36: magnetische Isolatoren
- 37: Fortsatz
- 40: Kontaktelement
- 100: Kurzschlusseinrichtung

- A-A: Längsachse der Schweißwerkzeugkupplung

## Patentansprüche

1. Schweißwerkzeugkupplung (1), insbesondere Schlauchpaketschnittstelle oder Schweißbrennergriffstück, zum Verbinden eines Schweißwerkzeuges (3), insbesondere eines Schweißbrennerhalses, mit einer Versorgungsleitung (6) einer Schweißvorrichtung, mit einer Kupplungseinrichtung (2) zum lösbaren Ankuppeln des Schweißwerkzeuges (3) mittels einer ein- und ausschaltbaren magnetischen Haltekraft, **dadurch gekennzeichnet, dass** die Kupplungseinrichtung (2) wenigstens ein Magnetsystem (10) und wenigstens eine Kurzschlusseinrichtung (100) aufweist, die relativ zueinander zwischen einer Einschaltstellung und einer Ausschaltstellung derart verschiebbar sind, dass der vom Magnetsystem (10) generierte magnetische Fluss in der Einschaltstellung unter Erzeugung der magnetischen Haltekraft aus der Kupplungseinrichtung (2) heraustritt und in der Ausschaltstellung mittels der Kurzschlusseinrichtung (100) unter Erlöschen der magnetischen Haltekraft zumindest teilweise in der Kupplungseinrichtung (2) kurzgeschlossen ist, dass das Magnetsystem (10) jeweils mehrere alternierend gepolte und/oder magnetisch voneinander isolierte Magnete (11, 12 ; 21, 22), insbesondere Dipolmagnete, aufweist, dass die Magnete (11, 12) des ersten Magnetsystems (10) ringförmig nebeneinander angeordnet sind und die Polachsen der Magnete (11, 12) in Umfangsrichtung der ringförmigen Anordnung oder senkrecht zur Ringebene ausgerichtet sind.

2. Schweißwerkzeugkupplung (1) nach Anspruch 1, **dadurch gekennzeichnet, dass** die Kurzschlusseinrichtung (100) wenigstens ein weiteres Magnetsystem (20) und/oder wenigstens einen Polschuh (30) aufweist.

3. Schweißwerkzeugkupplung (1) nach Anspruch 2, **dadurch gekennzeichnet, dass** der Polschuh (30) wenigstens zwei voneinander magnetisch isolierte Abschnitte (31) aufweist, die aus einem magnetisch leitenden, insbesondere ferromagnetischen, Material bestehen.

4. Schweißwerkzeugkupplung (1) nach Anspruch 2 oder 3, **dadurch gekennzeichnet, dass** das weitere, zweite Magnetsystem (20) den vom ersten Magnetsystem (10) generierten magnetischen Fluss in der Einschaltstellung, insbesondere außerhalb der Kupplungseinrichtung (2), verstärkt und in der Ausschaltstellung kurzschließt und/oder zumindest teilweise gegenkompensiert.

5. Schweißwerkzeugkupplung (1) nach Anspruch 2 bis 4, **dadurch gekennzeichnet, dass** der von der Gesamtheit aller Magnetsysteme (10, 20) generierte magnetische Fluss in der Einschaltstellung über den Polschuh (30) aus der Kupplungseinrichtung (2) heraustritt.

6. Schweißwerkzeugkupplung (1) nach einem der Ansprüche 2 bis 5, **dadurch gekennzeichnet, dass** das zweite Magnetsystem (10; 20) mehrere alternierend gepolte und/oder magnetisch voneinander isolierte Magnete (11, 12; 21, 22), insbesondere Dipolmagnete, aufweist.

7. Schweißwerkzeugkupplung (1) nach Anspruch 6, **dadurch gekennzeichnet, dass** die Magnete (11, 12; 21, 22) des ersten und/oder des zweiten Magnetsystems (10; 20) als Permanentmagnete und/oder Elektromagnete ausgebildet sind

8. Schweißwerkzeugkupplung (1) nach Anspruch 6 oder 7, **dadurch gekennzeichnet, dass** das erste und das zweite Magnetsystem (10; 20) derart zueinander angeordnet sind, dass die Pole der Magnete (11, 12) des ersten Magnetsystems (10) in der Einschaltstellung an jeweils gleichnamige und in der Ausschaltstellung an jeweils ungleichnamige Pole der Magnete (21, 22) des zweiten Magnetsystems (20) angrenzen.

9. Schweißwerkzeugkupplung (1) nach einem der Ansprüche 6 bis 8, **dadurch gekennzeichnet, dass**
a. die Magnete (11, 12) des ersten Magnetsystems (10) um eine Längsachse (A-A) der Schweißwerkzeugkupplung (1), angeordnet sind, und/oder dass
b. die Magnete (21, 22) des zweiten Magnetsystems (20) ringförmig nebeneinander, vorzugsweise um die Längsachse (A-A) der Schweißwerkzeugkupplung (1), angeordnet sind, wobei die Polachsen der Magnete (21, 22) parallel zur Ringebene oder senkrecht zur Umfangsrichtung der ringförmigen Anordnung ausgerichtet sind.

10. Schweißwerkzeugkupplung (1) nach einem der Ansprüche 2 bis 9, **dadurch gekennzeichnet, dass** die Polachse(n) des ersten Magnetsystems (10) senkrecht zu der oder den Polachse(n) des zweiten Magnetsystems (20) ausgerichtet ist bzw. sind.

11. Schweißwerkzeugkupplung (1) nach einem der vorhergehenden Ansprüche, **dadurch gekennzeichnet, dass**
a. das erste Magnetsystem (10) an einem insbesondere ringförmigen Schaltelement (13) aus vorzugsweise nicht-magnetisierbarem Material angeordnet ist, welches relativ zur Kurzschlusseinrichtung (100) verschiebbar, insbesondere um die Längsachse (A-A) der Schweißwerkzeugkupplung (1) drehbar, gelagert ist oder dass
b. die Kurzschlusseinrichtung (100) an einem insbesondere ringförmigen Schaltelement (13) aus vorzugsweise nicht-magnetisierbarem Material angeordnet ist, welches relativ zum ersten Magnetsystem (10) verschiebbar, insbesondere um die Längsachse (A-A) der Schweißwerkzeugkupplung (1) drehbar, gelagert ist.

12. Schweißwerkzeugkupplung (1) nach einem der Ansprüche 3 bis 11, **dadurch gekennzeichnet, dass** die magnetisch isolierten Abschnitte (31) des Polschuhs (30) ringsegmentförmig ausgebildet sind und/oder einen kreisförmigen, vorzugsweise koaxial zur Längsachse (A-A) ausgerichteten, Bund (32) bilden, an dessen einer Stirnseite (33) in der Einschaltstellung das anzubindende Schweißwerkzeug (3) gehalten ist und/oder an dessen andere Stirnseite (34) das erste Magnetsystem (10) angrenzt.

13. Schweißwerkzeugkupplung (1) nach Anspruch 12, **dadurch gekennzeichnet, dass** der Polschuh (30) einen hohlzylinderförmigen Fortsatz (37) aufweist, der sich an die magnetisch isolierten Abschnitte (31) bzw. den Bund (32), vorzugsweise koaxial zur Längsachse (A-A), ins Innere der Schweißwerkzeugkupplung (1) anschließt.

14. Schweißwerkzeugkupplung (1) nach einem der vorhergehenden Ansprüche, **dadurch gekennzeichnet, dass** die Abschnitte (31) des Polschuhs (30) und/oder die Magnete (11, 12) des ersten Magnetsystems (10) durch magnetische Isolatoren (35, 36) aus nicht-magnetisierbarem, vorzugsweise diamagnetischem, Material voneinander magnetisch isoliert sind.

15. Schweißwerkzeugkupplung (1) nach einem der Ansprüche 3 bis 14, **dadurch gekennzeichnet, dass** je ein Magnet (21, 22) des zweiten Magnetsystems (20) zwischen zwei benachbarten Abschnitten (31) des Polschuhs (30), vorzugsweise im Bereich der an das erste Magnetsystem (10) angrenzenden Stirnseite (34) des Bundes (32), angeordnet ist.

16. Schweißwerkzeugkupplung (1) nach einem der Ansprüche 3 bis 15, **dadurch gekennzeichnet, dass** zumindest in der Einschaltstellung je ein Abschnitt (31) des Polschuhs (30) an je einen Magnet (11, 12) des ersten Magnetsystems (10) angrenzt, wobei vorzugsweise die Abschnitte (31) zumindest im Angrenzbereich an die Magnete (11, 12) des ersten Magnetsystems (10) eine größere seitliche Ausdehnung aufweisen als die Magnete (11, 12).

17. Schweißwerkzeugkupplung (1) nach einem der Ansprüche 6 bis 16, **dadurch gekennzeichnet, dass** ein vorzugsweise ringförmiges Weicheneisenelement (14) vorgesehen ist, welches auf einer Seite des ersten Magnetsystems (10), vorzugsweise auf der dem Polschuh (30) bzw. dem Bund (32) abgewandten Seite, die alternierenden Pole der Magnete (11, 12) magnetisch leitend miteinander verbindet.

18. Schweißwerkzeugkupplung (1) nach einem der vorhergehenden Ansprüche, **dadurch gekennzeichnet, dass** wenigstens eine Zentrieröffnung (4), vorzugsweise koaxial zur Längsachse (A-A), vorgesehen ist, welche mit einem korrespondierenden Zentrierfortsatz (5) am Schweißwerkzeug (3) in Eingriff bringbar ist.

19. Schweißwerkzeugkupplung (1) nach einem der vorhergehenden Ansprüche, **dadurch gekennzeichnet, dass** wenigstens ein Medienanschluss (7), vorzugsweise im Boden der Zentrieröffnung (4), vorgesehen ist, welcher beim Verbinden des Schweißwerkzeuges (3) mit der Schweißwerkzeugkupplung (1) mit wenigstens einem korrespondierenden Medienanschluss (8) am Schweißwerkzeug (3), vorzugsweise am Ende des Zentrierfortsatzes (5), wirkverbindbar ist.

20. Schweißwerkzeug (3), insbesondere Schweißbrennerhals, zum Ankuppeln an eine Schweißwerkzeugkupplung (1) nach einem der vorhergehenden Ansprüche, **dadurch gekennzeichnet, dass** ein Kontaktelement (40) aus magnetisierbarem Material zur magnetischen Anbindung an die Kupplungseinrichtung vorgesehen ist, um das Schweißwerkzeug (3) in der Einschaltstellung aufgrund der magnetischen Haltekraft an die Schweißwerkzeugkupplung (1) anzuziehen.

21. Schweißwerkzeug (3) nach Anspruch 20, **dadurch gekennzeichnet, dass** zur magnetischen Anbindung an die Kupplungseinrichtung (2), vorzugsweise an den Polschuh (30), insbesondere an die Stirnseite (33) des Bundes (32), das Kontaktelement (40) ringförmig ausgebildet ist.

22. Schweißwerkzeug (3) nach Anspruch 20 oder 21, **dadurch gekennzeichnet, dass** ein Zentrierfortsatz (5) vorgesehen ist, der mit der korrespondierenden Zentrieröffnung (4) in der Schweißwerkzeugkupplung (1) in Eingriff bringbar ist.

23. Schweißwerkzeug (3) nach einem der Ansprüche 20 bis 22, **dadurch gekennzeichnet, dass** wenigstens ein Medienanschluss (8), vorzugsweise im Zentrierfortsatz (5), vorgesehen ist, welcher beim Verbinden des Schweißwerkzeuges (3) mit der Schweißwerkzeugkupplung (1) mit dem wenigstens einen Medienanschluss (7) in der Schweißwerkzeugkupplung (1) wirkverbindbar ist.

24. Schweißvorrichtung, insbesondere Schweißbrenner, mit einer Schweißwerkzeugkupplung (1) nach einem der Ansprüche 1 bis 19 und/oder einem Schweißwerkzeug (3) nach einem der Ansprüche 20 bis 23.

## Claims

1. Welding tool coupling (1), in particular tube package interface or welding torch handle piece, for connecting a welding tool (3), in particular a welding torch neck, to a supply line (6) of a welding device, with a coupling appliance (2) for releasably coupling to the welding tool (3) by means of a magnetic holding force that can be switched on and off, **characterized in that** the coupling appliance (2) has at least one magnet system (10) and at least one short circuit appliance (100) that can be displaced with respect to one another between an 'on' position and an 'off' position in such a manner that, in the 'on' position, the magnetic flux generated by the magnet system (10) exits from the coupling appliance (2), generating the magnetic holding force, and that, in the 'off' position, is at least partially short-circuited in the coupling appliance (2) by means of the short circuit appliance (100), with the magnetic holding force ceasing, that the magnet system (10) respectively has multiple magnets (11, 12; 21, 22), in particular dipole magnets, that are alternatingly polarized and/or magnetically insulated from one another, that the magnets (21, 22) of the first magnet system (10) are arranged in a ring-shaped manner next to each other, and the pole axes of the magnets (11, 12) are aligned in the circumferential direction of the ring-shaped arrangement or perpendicular to the ring plane.

2. Welding tool coupling (1) according to claim 1, **characterized in that** the short circuit appliance (100) has at least one further magnet system (20) and/or at least one pole shoe (30).

3. Welding tool coupling (1) according to claim 2, **characterized in that** the pole shoe (30) has at least two sections (31) that are magnetically insulated from one another and consist of a magnetically conductive, in particular ferromagnetic, material.

4. Welding tool coupling (1) according to claim 2 or 3, **characterized in that**, in the 'on' position, the further, second magnet system (20) amplifies the magnetic flux generated by the first magnet system (10) in particular outside of the coupling appliance (2), and short-circuits it in the 'off' position, and/or at least partially counter-compensates it.

5. Welding tool coupling (1) according to claim 2 to 4, **characterized in that**, in the 'on' position, the magnetic flux generated by the totality of all magnet systems (10, 20) exits from the coupling appliance (2) via the pole shoe (30).

6. Welding tool coupling (1) according to one of the claims 2 to 5, **characterized in that** the second magnet system (10; 20) has multiple magnets (11, 12; 21, 22), in particular dipole magnets, that are alternatingly polarized and/or magnetically insulated from each other.

7. Welding tool coupling (1) according to claim 6, **characterized in that** the magnets (11, 12; 21, 22) of the first and/or the second magnet system (10; 20) are embodied as permanent magnets and/or electromagnets.

8. Welding tool coupling (1) according to claim 6 or 7, **characterized in that** the first and the second magnet system (10; 20) are arranged in such a manner with respect to one another that the poles of the magnets (11, 12) of the first magnet system (10) respectively adjoin like poles of the magnets (21, 22) of the second magnet system (20) in the 'on' position, and respectively adjoin unlike poles of the magnets (21, 22) of the second magnet system (20) in the 'off' position.

9. Welding tool coupling (1) according to one of the claims 6 to 8, **characterized in that**
a. the magnets (11, 12) of the first magnet system (10) are arranged about a longitudinal axis (A-A) of the welding tool coupling (1), and/or that
b. the magnets (21, 22) of the second magnet system (20) are arranged in a ring-shaped manner next to each other, preferably about the longitudinal axis (A-A) of the welding tool coupling (1), wherein the pole axes of the magnets (21, 22) are aligned in parallel to the ring plane or perpendicular to the circumferential direction of the ring-shaped arrangement.

10. Welding tool coupling (1) according to one of the claims 2 to 9, **characterized in that** the pole axis (axes) of the first magnet system (10) is or are aligned perpendicular to the pole axis (axes) of the second magnet system (20).

11. Welding tool coupling (1) according to one of the preceding claims, **characterized in that**
a. the first magnet system (10) is arranged at a in particular ring-shaped switch element (13) that is preferably made of a non-magnetizable material and is mounted so as to be displaceable relative to the short circuit appliance (100), in particular rotatable about the longitudinal axis (A-A) of the welding tool coupling (1), or that
b. the short circuit appliance (100) is arranged at an in particular ring-shaped switch element (13) that is preferably made of a non-magnetizable material and is mounted so as to be displaceable relative to the first magnet system (10), in particular so as to be rotatable about the longitudinal axis (A-A) of the welding tool coupling (1).

12. Welding tool coupling (1) according to one of the claims 3 to 11, **characterized in that** the magnetically insulated sections (31) of the pole shoe (30) are embodied in a ring-segment-shaped manner and/or form a circular collar (32) that is preferably aligned to be coaxial to the longitudinal axis (A-A), with the welding tool (3) to be connected being held at its face side (33) in the 'on' position, and/or with the first magnet system (10) adjoining its other face side (34).

13. Welding tool coupling (1) according to claim 12, **characterized in that** the pole shoe (30) has an extension (37) in the shape of a hollow cylinder that connects to the magnetically insulated sections (31) or the collar (32), preferably coaxially to the longitudinal axis (A-A), into the interior space of the welding tool coupling (1).

14. Welding tool coupling (1) according to one of the preceding claims, **characterized in that** the sections (31) of the pole shoe (30) and/or the magnets (11, 12) of the first magnet system (10) are magnetically insulated from each other by magnetic insulators (35, 36) made of non-magnetizable, preferably diamagnetic, material.

15. Welding tool coupling (1) according to one of the claims 3 to 14, **characterized in that** respectively one magnet (21, 22) of the second magnet system (20) is arranged between two neighboring sections (31) of the pole shoe (30), preferably in the area of the face side (34) of the collar (32) that adjoins the first magnet system (10).

16. Welding tool coupling (1) according to one of the claims 3 to 15, **characterized in that** at least in the 'on' position respectively one section (31) of the pole shoe (30) adjoins respectively one magnet (11, 12) of the first magnet system (10), wherein the sections (31) preferably have a greater lateral expansion than the magnets (11, 12) at least in the adjoining area to the magnets (11, 12) of the first magnet system (10).

17. Welding tool coupling (1) according to one of the claims 6 to 16, **characterized in that** a preferably ring-shaped soft iron element (14) is provided, which connects the alternating poles of the magnets (11, 12) to each other in a magnetically conductive manner on a side of the first magnet system (10), preferably a side that is facing away from the pole shoe (30) or the collar (32).

18. Welding tool coupling (1) according to one of the preceding claims, **characterized in that**, preferably coaxially to the longitudinal axis (A-A), at least one centering opening (4) is provided that can be brought into mesh with a corresponding centering extension (5) at the welding tool (3).

19. Welding tool coupling (1) according to one of the preceding claims, **characterized in that**, preferably at the bottom of the centering opening (4), at least one media connection (7) is provided that can be brought into operative c onnection with at least one corresponding media connection (8) at the welding tool (3), preferably at the end of the centering extension (5), when the welding tool (3) is connected to the welding tool coupling (1).

20. Welding tool (3), in particular welding torch neck, for coupling to a welding tool coupling (1) according to one of the preceding claims, **characterized in that** a contact element (40) made of a magnetizable material is provided for magnetic connection to the coupling appliance to attract the welding tool (3) to the welding tool coupling (1) in the 'on' position as a result of the magnetic holding force.

21. Welding tool (3) according to claim 20, **characterized in that** the contact element (40) is embodied in a ring-shaped manner for the magnetic connection to the coupling appliance (2), preferably to the pole shoe (30), in particular to the face side (33) of the collar (32).

22. Welding tool (3) according to claim 20 or 21, **characterized in that** a centering extension (5) is provided that can be brought into mesh with the corresponding centering opening (4) in the welding tool coupling (1).

23. Welding tool (3) according to one of the claims 20 to 22, **characterized in that**, preferably in the centering extension (5), at least one media connection (8) is provided that can be brought into operative connection with the at least one media connection (7) in the welding tool coupling (1) when the welding tool (3) is connected to the welding tool coupling (1).

24. Welding device, in particular welding torch, with a welding tool coupling (1) according to one of the claims 1 to 19 and/or a welding tool (3) according to one of the claims 20 to 23.

## Revendications

1. Accouplement d'outil de soudage (1), en particulier une interface d'ensemble de tuyaux flexibles ou une poignée de chalumeau de soudage, destiné à relier un outil de soudage (3), en particulier un col de chalumeau de soudage, à une conduite d'alimentation (6) d'un dispositif de soudage, pourvu d'un dispositif d'accouplement (2) permettant l'accouplement libérable de l'outil de soudage (3) au moyen d'une force de retenue magnétique pouvant être activée et désactivée,
**caractérisé en ce que** le dispositif d'accouplement (2) comporte au moins un système magnétique (10) et au moins un dispositif de court-circuitage (100), lesquels peuvent être déplacés l'un par rapport à l'autre entre une position activée et une position désactivée, de telle manière que, dans la position activée, le flux magnétique généré par le système magnétique (10), en entraînant la production de la force de retenue magnétique, quitte le dispositif d'accouplement (2) et que, dans la position désactivée, il est court-circuité au moins en partie dans le dispositif d'accouplement (2) au moyen du dispositif de court-circuitage (100), en interrompant la force de retenue magnétique, **en ce que** le système magnétique (10) comporte respectivement plusieurs aimants (11, 12 ; 21, 22) polarisés de manière alternée et/ou magnétiquement isolés les uns de autres, en particulier des aimants dipolaires, **en ce que** les aimants (11, 12) du premier système magnétique (10) sont disposés côte à côte de manière annulaire et les axes polaires des aimants (11, 12) sont orientés dans la direction circonférentielle de l'agencement annulaire ou perpendiculairement au plan de l'anneau.

2. Accouplement d'outil de soudage (1) selon la revendication 1, **caractérisé en ce que** le dispositif de court-circuitage (100) comporte au moins un autre système magnétique (20) et/ou au moins une pièce polaire (30).

3. Accouplement d'outil de soudage (1) selon la revendication 2, **caractérisé en ce que** la pièce polaire (30) comporte au moins deux sections (31) magnétiquement isolées l'une de l'autre, qui sont constituées d'un matériau magnétiquement conducteur, notamment ferromagnétique.

4. Accouplement d'outil de soudage (1) selon la revendication 2 ou 3, **caractérisé en ce que** l'autre, le deuxième système magnétique (20) amplifie le flux magnétique généré par le premier système magnétique (10), dans la position activée, en particulier à l'extérieur du dispositif d'accouplement (2), et le court-circuite et/ou le compense au moins en partie dans la position désactivée.

5. Accouplement d'outil de soudage (1) selon les revendications 2 à 4, **caractérisé en ce que**, dans la position activée, le flux magnétique généré par tous les systèmes magnétiques (10, 20) quitte le dispositif d'accouplement (2) par l'intermédiaire de la pièce polaire (30).

6. Accouplement d'outil de soudage (1) selon l'une quelconque des revendications 2 à 5, **caractérisé en ce que** le second système magnétique (10 ; 20) comporte plusieurs aimants (11, 12 ; 21, 22) polarisés de manière alternée et/ou magnétiquement isolés les uns des autres, notamment des aimants dipolaires.

7. Accouplement d'outil de soudage (1) selon la revendication 6, **caractérisé en ce que** les aimants (11, 12 ; 21, 22) du premier et/ou du second système magnétique (10 ; 20) sont réalisés sous la forme d'aimants permanents et/ou d'électroaimants.

8. Accouplement d'outil de soudage (1) selon la revendication 6 ou 7, **caractérisé en ce que** les premier et second systèmes magnétiques (10 ; 20) sont disposés l'un par rapport à l'autre de manière à ce que, dans la position activée, les pôles des aimants (11, 12) du premier système magnétique (10) soient adjacents à des pôles respectivement identiques des aimants (21, 22) du second système magnétique (20) et, dans la position désactivés, ils soient adjacents à des pôles respectivement opposés de ces aimants.

9. Accouplement d'outil de soudage (1) selon l'une quelconque des revendications 6 à 8, **caractérisé en ce que**
a) les aimants (11, 12) du premier système magnétique (10) sont disposés autour d'un axe longitudinal (A-A) de l'accouplement d'outil de soudage (1), et/ou **en ce que**
b) les aimants (21, 22) du second système magnétique (20) sont disposés côte à côte de manière annulaire, de préférence autour de l'axe longitudinal (A-A) de l'accouplement d'outil de soudage (1), dans lequel les axes polaires des aimants (21, 22) sont orientés parallèlement au plan de l'anneau ou perpendiculairement à la direction circonférentielle de l'agencement annulaire.

10. Accouplement d'outil de soudage (1) selon l'une quelconque des revendications 2 à 9, **caractérisé en ce que** le/les axe(s) polaire(s) du premier système magnétique (10) est/sont orienté(s) perpendiculairement à l'axe/aux axes polaire(s) du second système magnétique (20).

11. Accouplement d'outil de soudage (1) selon l'une quelconque des revendications précédentes, **caractérisé en ce que**
a) le premier système magnétique (10) est disposé sur un élément de commutation (13), notamment annulaire, constitué de matériau de préférence non magnétisable qui est monté de manière à pouvoir être déplacé par rapport au dispositif de court-circuitage (100), en particulier de manière à ce qu'il puisse tourner autour de l'axe longitudinal (A-A) de l'accouplement d'outil de soudage (1), ou **en ce que**
b) le dispositif de court-circuitage (100) est disposé sur un élément de commutation (13), notamment annulaire, constitué de matériau de préférence non magnétisable qui est monté de manière à pouvoir être déplacé par rapport au premier système magnétique (10), en particulier de manière à ce qu'il puisse tourner autour de l'axe longitudinal (A-A) de l'accouplement d'outil de soudage (1).

12. Accouplement d'outil de soudage (1) selon l'une quelconque des revendications 3 à 11, **caractérisé en ce que** les sections magnétiquement isolées (31) de la pièce polaire (30) sont réalisées de manière à présenter la forme de segments annulaires et/ou forment une collerette circulaire (32), de préférence orientée coaxialement par rapport à l'axe longitudinal (A-A), sur la face avant (33) de laquelle est maintenu l'outil de soudage (3) devant être raccordé, dans la position activée, et/ou à l'autre face avant (34) de laquelle est adjacent le premier système d'aimant (10).

13. Accouplement d'outil de soudage (1) selon la revendication 12, **caractérisé en ce que** la pièce polaire (30) présente un prolongement (37) qui se raccorde aux sections magnétiquement isolées (31) ou à la collerette (32), de préférence coaxialement par rapport à l'axe longitudinal (A-A), à l'intérieur de l'outil de soudage (1).

14. Accouplement d'outil de soudage (1) selon l'une quelconque des revendications précédentes, **caractérisé en ce que** les sections (31) de la pièce polaire (30) et/ou les aimants (11, 12) du premier système magnétique (10) sont magnétiquement isolés les uns des autres par des isolants magnétiques (35, 36) constitués de matériau non magnétisable, de préférence diamagnétique.

15. Accouplement d'outil de soudage (1) selon l'une quelconque des revendications 3 à 14, **caractérisé en ce qu'**un aimant respectif (21, 22) du second système magnétique (20) est disposé entre deux sections voisines (31) de la pièce polaire (30), de préférence dans la région de la face avant (34) de la collerette (32) qui est adjacente au premier système magnétique (10).

16. Accouplement d'outil de soudage (1) selon l'une quelconque des revendications 3 à 15, **caractérisé en ce qu'**au moins dans la position activée, une section respective (31) de la pièce polaire (30) est contigüe à un aimant respectif (11, 12) du premier système magnétique (10), dans lequel les sections (31) présentent, au moins dans la région de contiguïté par rapport aux aimants (11,12) du premier système magnétique (10), une extension latérale supérieure à celle des aimants (11, 12).

17. Accouplement d'outil de soudage (1) selon l'une quelconque des revendications 6 à 16, **caractérisé en ce qu'**il est prévu un élément de fer à souder (14) de préférence annulaire qui, d'un côté du premier système magnétique (10), de préférence sur la pièce polaire (30) ou du côté tourné à l'opposé de la collerette (32), relie l'un à l'autre de manière magnétiquement conductrice les pôles alternés des aimants (11, 12).

18. Accouplement d'outil de soudage (1) selon l'une quelconque des revendications précédentes, **caractérisé en ce qu'**il est prévu au moins une ouverture de centrage (4), de préférence coaxiale par rapport à l'axe longitudinal(A-A), qui peut être mise en prise avec un prolongement de centrage (5) correspondant sur l'outil de soudage (3).

19. Accouplement d'outil de soudage (1) selon l'une quelconque des revendications précédentes, **caractérisé en ce qu'**il est prévu au moins un raccord de fluide (7), de préférence au fond de l'ouverture de centrage (4), qui peut être relié de manière à coopérer, lors du raccordement de l'outil de soudage (3) à l'accouplement d'outil de soudage (1), avec au moins un raccord de fluide (8) correspondant sur l'outil de soudage (3), de préférence à l'extrémité du prolongement de centrage (5).

20. Outil de soudage (3), en particulier un col de cygne, destiné à être accouplé à un accouplement d'outil de soudage (1) selon l'une quelconque des revendications précédentes, **caractérisé en ce qu'**il est prévu un élément de contact (40) constitué de matériau magnétisable destiné à effectuer un raccordement magnétique au dispositif d'accouplement, afin que l'outil de soudage (3), dans la position d'activation, soit attiré vers l'accouplement d'outil de soudage (1) du fait de la force de maintien magnétique.

21. Outil de soudage (3) selon la revendication 20, **caractérisé en ce que**, pour le raccordement magnétique au dispositif d'accouplement (2), de préférence à la pièce polaire (30), en particulier à la face avant (33) de la collerette (32), l'élément de contact (40) est réalisé de manière à présenter une forme annulaire.

22. Outil de soudage (3) selon la revendication 20 ou 21, **caractérisé en ce qu'**il est prévu un prolongement de centrage (5) qui peut être mis en prise avec l'ouverture de centrage (4) correspondante dans l'accouplement d'outil de soudage (1).

23. Outil de soudage (3) selon l'une quelconque des revendications 20 à 22, **caractérisé en ce qu'**il est prévu au moins un raccord de fluide (8), de préférence dans le prolongement de centrage (5), qui peut être relié en liaison active, dans l'accouplement d'outil de soudage (1), avec l'au moins un raccord de fluide (7) lors du raccordement de l'outil de soudage (3) avec l'accouplement d'outil de soudage (1).

24. Dispositif de soudage, en particulier un chalumeau, comportant un accouplement d'outil de soudage (1) selon l'une quelconque des revendications 1 à 19 et/ou un outil d'usinage (3) selon l'une quelconque des revendications 20 à 23.
